(19) Europäisches Patentamt
European Patent Office
Office européen des brevets

(11) **EP 2 172 896 A1**

(12) **DEMANDE DE BREVET EUROPEEN**

(43) Date de publication:
**07.04.2010 Bulletin 2010/14**

(51) Int Cl.:
**G06Q 30/00** *(2006.01)* **G07F 7/08** *(2006.01)*
**G06F 21/00** *(2006.01)*

(21) Numéro de dépôt: **08165670.4**

(22) Date de dépôt: **02.10.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **Nagravision S.A.**
**1033 Cheseaux-sur-Lausanne (CH)**

(72) Inventeur: **Kudelski, Henri**
**1071 Chexbres (CH)**

(74) Mandataire: **Leman Consulting S.A.**
**Chemin de Précossy 31**
**1260 Nyon (CH)**

(54) **Méthode de gestion d'une valeur dans un dispositif à prépaiement**

(57) Le but de la présente invention est de sécuriser un dispositif à prépaiement pour l'accès à des contenus audio/vidéo en vue du remboursement du solde non utilisé une fois que le détenteur dudit dispositif présente le présente à un centre de contrôle.

Ce but est atteint par une méthode de gestion d'une première valeur V1 dans un dispositif à prépaiement comprenant un identifiant propre à chaque dispositif UA et une donnée de contrôle (CT), cette méthode comprenant les étapes suivantes :
- réception d'une requête en modification de la première valeur (V1) pour un montant (M),
- calcul de la nouvelle valeur (V1') après la modification de la première valeur (V1) par le montant (M),
- détermination d'une deuxième valeur (N) représentant la différence entière entre le résultat (N1) d'une fonction monotone croissante (F) sur la nouvelle valeur (V1') et le résultat (N2) de ladite fonction monotone croissante (F) sur la première valeur (V1),
- modification de la valeur de contrôle (CT) par l'exécution d'une fonction à sens unique sur ladite valeur de contrôle (CT) d'un nombre de fois égal à la deuxième valeur (N).

Fig. 1

## Description

## Introduction

La présente invention concerne le domaine de la distribution de service par prépaiement, en particulier des services de télévisions à péages.

## Etat de la technique

Les services audio visuels sont transmis sous forme de flux de données à destination de récepteurs, que ce soit des récepteurs fixes (Set-top-box) ou mobiles. Comme exemple de tel flux de données, on entend un service d'informations boursières, de météo, de télévision généraliste, d'un événement sportif ou autres. Ces contenus peuvent être diffusés sur des unités d'utilisateurs tels qu'un décodeur de télévision à péage, un ordinateur voire un téléphone portable, un "palm-top", un PDA, une radio, une télévision, une borne multimédia.

Le flux numérique est encrypté afin de pouvoir en contrôler l'utilisation et de définir des conditions pour une telle utilisation. Cette encryption est réalisée grâce à des mots de contrôle (Control Words) qui sont changés à intervalle régulier (entre 5 et 30 secondes) afin de dissuader toute attaque visant à retrouver un tel mot de contrôle.

Pour que l'unité d'utilisateur puisse décrypter le flux encrypté par un mot de contrôle, ce dernier lui est envoyé indépendamment du flux dans un message de contrôle (ECM) encrypté par une clé propre au système de transmission entre le centre de gestion (CAS) et le module de sécurité de l'unité d'utilisateur. En effet, les opérations de sécurité sont effectuées dans un module de sécurité (SC) qui est généralement sous la forme d'une carte à puce, réputée inviolable. Ce module est de type amovible à l'unité d'utilisateur et traite les signaux relatifs aux droits du récepteur.

Lors de la décryption du message de contrôle (ECM), il est vérifié, dans le module de sécurité (SC), que le droit pour accéder au flux considéré est présent. Le mot de contrôle n'est retourné sous forme décryptée à l'unité d'utilisateur que lorsque la comparaison est positive.

Ce droit peut être géré par des messages d'autorisation (EMM) qui charge un tel droit dans l'unité (SC). D'autres possibilités sont également possibles tels que l'envoi de clés de décryptage.

La comptabilisation de l'utilisation de tels contenus est aujourd'hui basée sur le principe de l'abonnement, de l'achat d'événements ou du paiement par unité de temps.

L'abonnement permet de définir un droit associé à un ou des canaux de diffusion et permet à l'utilisateur d'obtenir ces canaux décryptés si le droit est présent dans son module de sécurité.

Parallèlement, il est possible de définir des droits propres à un contenu, tel qu'un film ou un match de football. L'utilisateur peut acquérir ce droit (achat par exemple) et ce contenu sera spécifiquement géré par ce droit. Cette méthode est connue sous l'appellation "pay-per-view" (PPV).

Pour ce qui concerne le paiement par unité de temps, le module de sécurité comprend un crédit qui est débité en fonction de la consommation réelle de l'utilisateur. Ainsi par exemple, une unité sera débitée chaque minute à ce crédit quelque soit le canal regardé. Il est possible selon les implémentations techniques, de varier l'unité de comptabilisation, soit dans la durée, soit dans la valeur du temps alloué, voire en combinant ces deux paramètres pour adapter la facturation au type de produit transmis.

Pour ce qui concerne les cartes valeurs, c'est-à-dire qu'en plus des fonctions de contrôle d'accès, elles comportent un crédit qui peut être librement attribué à des contenus sélectionnés par l'utilisateur. Pour des raisons de sécurité et de gestion financière, ces cartes valeurs ont une date limite d'utilisation après laquelle elles refusent de fonctionner.

Ainsi, après la date limite de validité, ces cartes peuvent encore disposer d'un crédit non négligeable et pour lequel l'utilisateur peut revendiquer la remboursement, soit sous forme d'espèces, soit sous forme de crédit sur une nouvelle carte.

Le fait qu'un remboursement soit possible sur ces cartes valeurs les rend très attrayantes pour des tiers malveillants cherchant à éliminer tous débits de la carte afin de se faire rembourser tout ou partie des contenus audio/vidéo consommés.

## Brève description de l'invention

Le but de la présente invention est de sécuriser un dispositif à prépaiement pour l'accès à des contenus audio/vidéo en vue du remboursement du solde non utilisé une fois que le détenteur dudit dispositif le présente à un centre de contrôle.

Ce but est atteint par une méthode de gestion d'une première valeur V1 dans un dispositif à prépaiement comprenant un identifiant propre à chaque dispositif UA et une donnée de contrôle (CT), cette méthode comprenant les étapes suivantes :

- réception d'une requête en modification de la première valeur (V1) pour un montant (M),

- calcul de la nouvelle valeur (V1') après la modification de la première valeur (V1) par le montant (M),

- détermination d'une deuxième valeur (N) représentant la différence entière entre le résultat (N1) d'une fonction monotone croissante (F) sur la nouvelle valeur (V1') et le résultat (N2) de ladite fonction monotone croissante (F) sur la première valeur (V1),

- modification de la valeur de contrôle (CT) par l'exécution d'une fonction à sens unique sur ladite valeur de contrôle (CT) d'un nombre de fois égal à la deuxième valeur (N).

Ainsi la présente invention se propose d'utiliser les caractéristiques d'une fonction à sens unique pour faire évoluer une valeur de contrôle afin de rendre tout retour en arrière impossible.

Dans le cadre de l'invention, cette opération unidirectionnelle est une application mathématique H d'un ensemble source vers un ensemble objet, dans laquelle chaque élément x de l'ensemble source se voit attribuer une image H(x). Ces fonctions sont particulièrement utiles lorsque ce sont des fonctions dites Hash, telles que définies en page 27 de l'ouvrage RSA Laboratories' Frequently Asked Questions About Today's Cryptography, v4.0. L'élément x peut être d'une longueur quelconque mais H(x) est toujours une suite de caractères de longueur fixe ("fixed-size string"). Une telle fonction est difficile à inverser, c'est-à-dire que la connaissance de H(x) ne permet en général pas de retrouver x. Elle est de plus dite libre de collision lorsqu'elle est injective, c'est-à-dire que H(y)=H(x) entraîne nécessairement y=x, de même que H(y)≠H(x) entraîne nécessairement y≠x.

Par fonction monotone croissante, on entend une fonction y=f(x) dont l'ensemble d'arrivée y est croissant ou égal pour un ensemble x donné. Considérant deux couples y1=f(x1) et y2=f(x2), pour lequel x2>x1, le résultat y2 est toujours soit égal, soit supérieur au résultat y1.

Un point important est le principe de vérification à posteriori par un centre d'administration. Ce centre va lire la valeur V1 qui représente le crédit restant. La fonction monotone croissante F lui permet de calculer la seconde valeur N qui correspond au nombre total de fonctions unidirectionnelles appliqué à la valeur de contrôle CT. Le centre d'administration peut calculer la valeur de contrôle qui devrait être associée à cette valeur V1 et la comparer avec la valeur de contrôle qui est stockée dans la carte valeur.

**Brève description des figures**

L'invention sera mieux comprise grâce à la description détaillée qui va suivre et qui se réfère aux dessins annexés qui sont donnés à titre d'exemple nullement limitatif, à savoir:

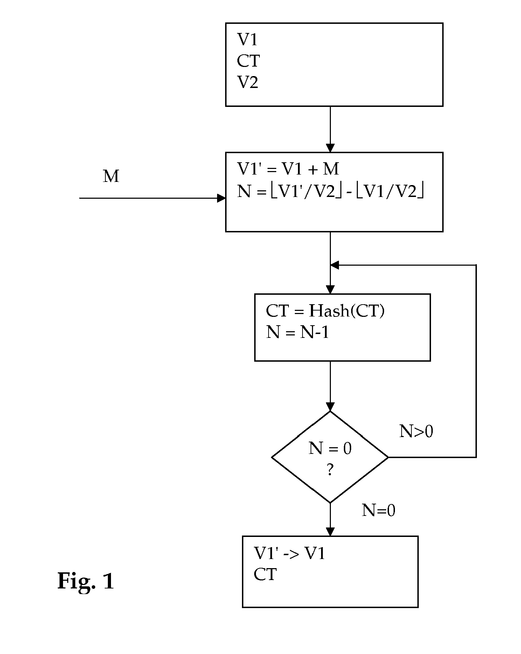

- La figure 1 illustre l'organigramme d'un des modes de réalisation de l'invention.

**Description détaillée**

Chaque carte ou dispositif à prépaiement peut être fourni au client sous différente forme. Bien que la forme la plus connue soit la carte à puce de type ISO 7816, ce dispositif peut prendre d'autres formes telles que carte PCMCIA, RFID ou dongle USB.

Lors de l'initialisation d'un tel dispositif, différentes valeurs sont stockées, à savoir un numéro d'identification UA, une valeur de contrôle CT et une valeur de crédit VC. La valeur de débit ou première valeur V1 est initialisée à zéro. Le dispositif est maintenant prêt à l'usage.

Lorsqu'il est inséré dans un décodeur, ce dispositif reçoit les messages de sécurité provenant d'un centre de gestion. Ces messages peuvent provenir d'un flux DVB-T, DVB-H ou via le réseau mobile GMS par SMS. Le crédit contenu dans le dispositif peut être utilisé de différentes manières, soit par la consommation en fonction du temps ou par l'achat d'un ou plusieurs contenus.

Le flux de données audio/vidéo est accompagné de messages de contrôle (ECM) qui décrivent le ou les droits nécessaires pour l'accès audit flux. Dans le cas d'un flux en accès par unité de temps, le dispositif de prépaiement consomme une unité de temps (qui peut varier d'un contenu à l'autre) pour ouvrir une durée d'autorisation. On parle ici de droit temporaire lié à une durée. Selon l'implémentation de l'invention, ce droit temporaire peut être spécifique à un canal ou à plusieurs canaux. Dans le premier cas, un changement de canal termine l'autorisation au contenu et un nouveau droit temporaire doit être acquis propre à ce nouveau canal.

L'utilisateur peut également acheter des contenus proposés via le guide électronique de programme, cet achat d'une part diminuant le crédit dans le dispositif et d'autre part créant un droit stocké dans ledit dispositif, droit relié audit contenu. Ce contenu peut être un événement (film, match etc.), une série d'événements (une saison de football, une série télévisée) ou une (ou plusieurs) chaîne de télévision pour une durée donnée (canal "Découverte" pour 2 mois, bouquet de chaînes "Sport").

Le fait que le droit soit présent dans le dispositif autorise ce dernier à transmettre la ou les clés au décodeur auquel il est connecté.

Deux manières sont utilisées pour la gestion du crédit dans un tel dispositif soit par décrémentation ou par incrémentation.

Dans le premier cas, un dispositif contenant un crédit de 200 Euro va voir cette valeur diminuer lors de chaque consommation. Une fois le crédit à zéro, aucun droit n'est créé et le dispositif cesse de transmettre les clés au décodeur.

Dans le second cas, une valeur de crédit de 200 Euro est stockée ainsi qu'un compteur de débit. Ce compteur est initialement à zéro et augmente à chaque achat. Une fois que la valeur du compteur atteint la valeur du crédit, le dispositif cesse de retourner les clés au décodeur.

Il est connu qu'un tel dispositif est identifié par un numéro unique UA. Un centre d'administration stocke l'identification UA de chaque dispositif avec la valeur initiale du crédit.

En plus de cela, un tel dispositif va contenir une donnée de contrôle CT qui, de préférence, est propre à chaque dispositif. Le centre d'administration va également stocker cette valeur avec l'identification du dispositif. Grâce à cette valeur de contrôle CT, la valeur du crédit restant pourra être vérifiée postérieurement de manière fiable.

Le processus est le suivant, prenant l'exemple d'une valeur de crédit fixe et d'une valeur de débit en augmentation (voir exemple ci-dessus).

Selon notre exemple, la valeur du crédit est de 200 Euro et la valeur du débit V1 est de 10.5 Euro. L'achat initié par l'utilisateur est d'une valeur M de 2.8 Euro pour un événement télévisuel.

La fonction monotone croissante est par exemple une fonction logarithme:

$$Y = 10 \log(x) + 3$$

Valeur initiale V1 : 10.5     Y1 = 13.212
Valeur finale V1' : 13.3     Y1' = 14.238

Différence en valeur absolue N : 1 soit $\lfloor Y1' \rfloor - \lfloor Y1 \rfloor$

En conséquence, la valeur de contrôle se verra appliquer une seule fonction unidirectionnelle.

D'autres fonctions monotones croissantes peuvent être utilisée comme la division. L'organigramme de la figure 1 correspond à cet exemple.

Il a été convenu que la granularité de changement V2 déclenchant une modification de la valeur de contrôle était un Euro.

Valeur initiale V1 : 10.5     Granularité V2 : 1
Valeur finale V1' : 13.3

Différence en valeur absolue N = V1'/V2 - V1/V2 soit $\lfloor 13.3/1 \rfloor - \lfloor 10.5 / 1 \rfloor = 3$

On ne garde que la partie entière de la division (quotient) pour calculer la différence entre ces deux quotients.

Ainsi, la valeur de contrôle va être modifiée 3 fois par une fonction à sens unique CT' = Hash ( Hash ( Hash (CT) ) ). Trois itérations de cette fonction à sens unique vont être effectuées, la fonction suivante utilisant le résultat de la fonction précédente.

La valeur finale de contrôle CT' sera stockée avec la nouvelle valeur de débit, soit 13.3.

Selon un mode de réalisation alternatif, le quotient de la division $\lfloor 13.3/1 \rfloor$ représentant le nombre total de fois que la fonction à sens unique a été appliquée, est conservé en mémoire avec la valeur de contrôle afin de ne pas refaire ce calcul lors du prochain débit.

On peut donc considérer qu'à chaque valeur de débit V1 est associé une valeur de contrôle CT unique par dispositif.

Lors de la vérification du dispositif par le centre d'administration, par exemple pour une demande de remboursement de la valeur non utilisée du crédit, le dispositif transmet son numéro d'identification UA, la valeur de débit V1 et la valeur de contrôle CT. Grâce à l'identifiant du dispositif UA, le centre ira chercher dans sa base de données la valeur de contrôle correspondante initiale CTO. Sur la base de la valeur de débit, ici 13.3 Euro, il suffira pour le centre d'administration d'effectuer 13 fois la fonction à sens unique sur la valeur de contrôle initiale CTO. La comparaison entre la valeur ainsi obtenue et la valeur de contrôle reçue du dispositif permet de déterminer avec certitude si la valeur de débit indiquée par le dispositif est exacte (pour la partie absolue soit 13 Euro). Dans le cas où la valeur de contrôle calculée ne correspond pas à la valeur reçue par le dispositif, ce dispositif est considéré comme altéré et des mesures seront prises selon la politique de l'opérateur.

Il est à noter que le changement d'état de la valeur de débit qui déclenche la modification de la valeur de contrôle CT peut être différente selon l'implémentation de l'invention. Il est possible de modifier la valeur de contrôle à chaque changement de 0.5 Euro par exemple. Dans ce cas, lors de la vérification, la valeur de débit sera divisée par la granularité V2 et le quotient indiquera le nombre de fois que la fonction à sens unique a été appliquée sur la valeur de contrôle CT.

Selon un mode simplifié de l'invention, et pour autant que les produits à l'achat grâce au crédit contenu dans le dispositif soient dans une plage restreinte, il est possible d'effectuer une modification de la valeur de contrôle lors de chaque achat. Prenons l'exemple d'une offre de produits à l'achat comprise entre 2.5 et 5 Euro. Le centre d'administration, lors de la vérification, pourra calculer le nombre de fonctions à sens unique entre la valeur initiale CTO et la valeur lue CT dans le dispositif. A chaque opération à sens unique, le centre compare le résultat avec la valeur de contrôle CT. Lorsque les deux valeurs sont identiques, le nombre X de fonctions effectuées équivaut donc à X achats au minimum et donc on peut déterminer la valeur minimale de la valeur de débit par la multiplication de X par 2.5 (prix minimal). Si la valeur de débit annoncée est inférieure, le dispositif est compromis et le centre pourra prendre les mesures nécessaires.

Dans ce mode de réalisation, plus la plage des prix des offres est faible, plus la vérification est fiable.

Le même principe de vérification peut être appliqué à une date. Le dispositif reçoit dans les messages qui lui sont adressés, des informations sur la date courante. Un message d'autorisation, en plus du droit qu'il contient, voire un prix, contient un champ indicatif du temps qui peut avoir de nombreuses formes. Par exemple le plus connu est sous forme jour/mois/année ou plus simplement un compteur propre au système de diffusion variant linéairement. Le dispositif va contenir lors de l'initialisation une date initiale et une seconde valeur de contrôle CTDO. Cette seconde valeur de contrôle, comme la première est de préférence propre à chaque dispositif.

De le même manière que pour la valeur de débit, on décide d'une unité de changement (par exemple l'heure) qui déclenche l'exécution de la fonction unique. Lors de la réception d'un message, le dispositif calcule le nombre d'unités de changement entre la date courante et la date précédemment mémorisée. Parallèlement au stockage de la nouvelle date, il effectue un nombre de fonctions à sens unique sur la seconde valeur de contrôle équivalent au nombre d'unités de changement. Cette seconde valeur de contrôle pourra servir pour authentifier des transactions.

Lors d'une transaction, par exemple l'achat d'un événement télévisuel, on sauve dans la carte valeur la date de l'achat, un identifiant de l'événement et une valeur de vérification. Cette valeur de vérification est le résultat d'une seconde fonction à sens unique de la seconde valeur de contrôle CTD. Il est à noter que cette seconde fonction à sens unique est d'un type différent (par exemple initialisée par une clé spécifique) que la fonction à sens unique appliquée sur la seconde valeur de contrôle CTD lors du changement de la date.

Ainsi, si une authentification doit être faite de l'achat d'un tel événement à posteriori, le centre d'administration va pouvoir lire la date de l'achat de l'événement et calculer la seconde valeur de contrôle CTD'. Ceci grâce à l'identifiant de la carte valeur qui lui permet de retrouver dans sa base de données la seconde valeur de contrôle initiale CTDO et la date initiale. Grâce à la date de l'événement, le nombre de fonctions uniques est calculé et appliqué sur la seconde valeur de contrôle CTD. Une fois cette valeur de contrôle CTD' calculée, il applique la seconde fonction à sens unique pour obtenir la valeur de référence qui sera comparée avec celle CTD qui est dans la carte valeur. Si la comparaison est positive, ceci signifie que la date est authentique.

## Revendications

**1.** Méthode de gestion d'une première valeur V1 dans un dispositif à prépaiement comprenant un identifiant propre à chaque dispositif UA et une donnée de contrôle (CT), cette méthode comprenant les étapes suivantes :

- réception d'une requête en modification de la première valeur (V1) pour un montant (M),
- calcul de la nouvelle valeur (V1') après la modification de la première valeur (V1) par le montant (M),
- détermination d'une deuxième valeur (N) représentant la différence entière entre le résultat (N1) d'une fonction monotone croissante (F) sur la nouvelle valeur (V1') et le résultat (N2) de ladite fonction monotone croissante (F) sur la première valeur (V1),
- modification de la valeur de contrôle (CT) par l'exécution d'une fonction à sens unique sur ladite valeur de contrôle (CT) d'un nombre de fois égal à la deuxième valeur (N).

**2.** Méthode selon la revendication 1, **caractérisé en ce que** la fonction monotone croissante (F) est une division entre la première valeur (V1) ou la nouvelle valeur (V1') par une granularité (V2) de changement de la première valeur (V1), la deuxième valeur (N) étant calculée selon la formule :
$N = V1'/V2 - V1/V2$, le résultat de chaque division ne retenant que la partie entière.

**3.** Méthode selon les revendications 1 ou 2, **caractérisée en ce que** le résultat de la fonction monotone croissante sur la nouvelle valeur (V1') est stocké avec la nouvelle valeur (V1') afin d'éviter à devoir la recalculer lors de la prochaine requête en modification du crédit.

**4.** Méthode selon l'une des revendications 1 à 3, **caractérisée en ce que** le dispositif à prépaiement comprend une valeur représentant une date courante (D1) et une seconde valeur de contrôle (CTD) relative à une date initiale (D0), cette méthode comprenant les étapes suivantes :

- réception d'une requête en transaction en modification de la première valeur (V1) pour un montant (M), cette requête comprenant de plus une nouvelle date (D1'),
- détermination d'une troisième valeur (M) représentant la différence entière entre le résultat (M1) d'une fonction monotone croissante (G) sur la nouvelle date (D1') et le résultat (M2) de ladite fonction monotone croissante (G) sur la date courante (D1),
- modification de la seconde valeur de contrôle (CTD) par l'exécution d'une fonction à sens unique sur ladite valeur de contrôle (CTD) d'un nombre de fois égal à la troisième valeur (M),
- exécution d'une seconde fonction à sens unique (H) sur ladite seconde valeur de contrôle (CTD) et stockage du résultat avec la nouvelle date (D1').

V1
CT
V2

M

$$V1' = V1 + M$$
$$N = \lfloor V1'/V2 \rfloor - \lfloor V1/V2 \rfloor$$

CT = Hash(CT)
N = N-1

N = 0
?

N>0

N=0

V1' -> V1
CT

**Fig. 1**

**RAPPORT DE RECHERCHE EUROPEENNE**

Numéro de la demande

EP 08 16 5670

| | Europäisches Patentamt / European Patent Office / Office européen des brevets |
|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 03/085959 A (NAGRAVISION SA [CH]; SASSELLI MARCO [CH]) 16 octobre 2003 (2003-10-16) * le document en entier * * abrégé * ----- | 1-4 | INV. G06Q30/00 G07F7/08 G06F21/00 |
| | | | **DOMAINES TECHNIQUES RECHERCHES (IPC)** G06Q G07F G06F |

Le présent rapport a été établi pour toutes les revendications

| Lieu de la recherche | Date d'achèvement de la recherche | Examinateur |
|---|---|---|
| Munich | 29 mai 2009 | Schneiderlin, Jean |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 16 5670

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-05-2009

| Document brevet cité au rapport de recherche | | Date de publication | Membre(s) de la famille de brevet(s) | | Date de publication |
|---|---|---|---|---|---|
| WO 03085959 | A | 16-10-2003 | AT | 383030 T | 15-01-2008 |
| | | | AU | 2003214529 A1 | 20-10-2003 |
| | | | BR | 0309249 A | 09-02-2005 |
| | | | CA | 2481750 A1 | 16-10-2003 |
| | | | CN | 1647502 A | 27-07-2005 |
| | | | DE | 60318416 T2 | 08-01-2009 |
| | | | DK | 1493268 T3 | 19-05-2008 |
| | | | EP | 1353501 A1 | 15-10-2003 |
| | | | ES | 2299688 T3 | 01-06-2008 |
| | | | HK | 1073039 A1 | 03-04-2008 |
| | | | HR | 20040934 A2 | 28-02-2005 |
| | | | IS | 7463 A | 20-09-2004 |
| | | | JP | 2005528020 T | 15-09-2005 |
| | | | MX | PA04009734 A | 13-12-2004 |
| | | | PT | 1493268 E | 09-04-2008 |
| | | | RU | 2316136 C2 | 27-01-2008 |
| | | | US | 2005177514 A1 | 11-08-2005 |
| | | | ZA | 200408195 A | 26-07-2006 |

EPO FORM P0460

Pour tout renseignement concernant cette annexe : voir Journal Officiel de l'Office européen des brevets, No.12/82

8